# EUROPEAN PATENT SPECIFICATION

(11) **EP 0 557 231 B1**
(45) Date of publication and mention of the grant of the patent: **29.12.1997**
(21) Application number: 93500013.3
(22) Date of filing: 05.02.1993
(51) Int. Cl.: B23B 5/32

(54) **Lathe for railway wheels**
Drehmaschine für Eisenbahnräder
Tour pour roues de chemin de fer

(30) Priority: 07.02.1992 ES 9200255
(43) Date of publication of application: 25.08.1993
(73) Proprietor: INVESTIGACION Y ASESORAMIENTO TECNICO, S.A.(INVASTESA), E-28014 Madrid (ES)
(72) Inventor: Lopez Gomez, José Luis, ES-28023 Madrid (ES); Sanchez Revuelta, Angel Luis, ES-28932 Madrid (ES)
(74) Representative: Cadenas Herrero, Argimiro

(56) References cited:
- DE-B- 1 154 332
- FR-A- 1 256 588
- FR-A- 2 479 722

## Description

The present specification refers to a Patent of Invention concerning a lathe for railway wheels, the evident purpose of which is to perform an appropiate railway vehicle wheel turning on a lathe, after these having been subjected to a checking operation and having determinated the treatment to be followed by the wheels carried on the same shaft, relying on a wheel shaft support on their own grease box, the turning operation being carried out on a sole lathe passing of the whole area to be machined, and disposing of a mechanism which orientates the pulling heads according to the shaft treading bands themselves.

### FIELD OF THE INVENTION

The application of this invention is envisaged to the railway treating and maintaining industry.

### RELATED ART

It is known, at present, the existence of several lathes and mechanisms all them intended to obtain the turning of wheels carried by a railway vehicle.

From the existing patents of invention, it is known the Spanish Patent of Invention No. 86011/5 concerning a pit lathe for regrinding wheels of railway vehicles, said patent covering a lathe having the necessary means to correctly position the rollers and to avoid possible vibrations.

Said lathe has also a positioning system for the shaft of - wheels to be turned on a lathe, in order to correctly position those wheels in relation to the machining or turning heads, relying on means which allows to take a fixed reference with regard to a point of the wheel shaft when the wheels are only supported on pulling rollers

This system is composed of two pulling rails which are located at least at a side of the installation, and having been provided carriages fitted with lifting means driven by motor-reducers.

From the Spanish Patent of Invention No. 8602230, it is known a series of improvents made of a pit lathe for regrinding railway vehicle wheels, these improvements consisting, exactly, partly, of providing the lathe with means allowing to effect a continuous measurement of the wheel diameter which is being reground, this diameter measurement being obtained with regard to the relationship existing between the rotation of one of the rollers and the rotation of the wheel.

On the other side, according to said improvements, it is possible to use, as a measurement element, one of the rollers effecting the pulling of the wheel.

Also, the measurement rollers has a peryphery corresponding to the profile defining in a continuous way the wheel diameter, adapting itself always to this latter.

In syntesis, it can be said that the lathes known by the above patents form an unitary assembly, having two or more headstocks in order to simultaneously turn two or more wheels.

All headstocks and other mechanisms are integrated on a common bedplate or frame, which, due to their great volume, require to be installed in specially designed aisles to this end.

From the documents FR-A-1 256 588 and FR-A-2 479 722, it is known to provide lathes for reprofiling railway wheels wherein the railway shaft is held in place by mounting means connected to the grease boxes of the wheels and pulling rollers engaged with the treading bands of the wheels, as well as transverse rollers in contact with the inner faces of the wheels.

An evident solution to this problem would be to provide a lathe having a noticeable weight reduction on the order of 80 - 85% in relation to the conventional lathes, with which it could be obtained a noteworthy economy in manufacture and, at the same time, the possibility of it being capable of being installed in a conventional maintenance aisle, not interfering the passage of railway vehicles.

At the same time, and on the basis of a simple embodiment, it would be possible to incorporate multiple periferals allowing mechanizing operations and to cut machine times, such as wheel diameter measuring devices, incorporating a hydraulic copier or numerical control to generate profiles, including also an equipment for handling shavings or a vehicle puller, these being moved by a fully independent unit of the own vehicle traction.

Nevertheless, up to now, nothing is known about the existence of a lathe having the features pointed out as suitable.

### SUMMARY OF THE INVENTION

The lathe for railway wheels of the invention as defined in the preamble of claim 1, constitutes, itself, an evident solution to the current problems existing in this field, because it presents all the necessary features to obviate the present problems.

In a more definite way, as stated in the characterising part of claim 1, the mentioned lathe for railway wheels is consituted starting from a railway shaft, which is supported through adjustable supplements located on a static area of the machine and stiffly united to the bedplate forming a part of the civil works.

The pulling rollers may be hydraulically lifted to attain the treading bands, and, by adjusting the hydraulic pressure, the shaft is discharged to a value enough as to pull the wheels with no slipping, due to the fact that both heads are totally independent and to counteract the cutting force tangentially directed to the treading band.

This fact has the advantage that the machining is independent of the treading condition, for which reason the form defects which could be left upon machining the wheel are related only to the condition of the vehicle grease boxes, and not to the previous condition to the mechanizing exhibited by the treading.

In this way, a support for the wheel shaft on its own grease box is obtained, and the pulling rollers originate the necessary couple to only counteract the cutting force.

The invention allows to carry out a turning in only one passing on the area to be mechanized, generating a continuous profile - from the outer face of the wheel to the inner face of the wheel itself, without the need for modifying the shaft support and the wheel pulling.

This fact has the advantage that no profile discontinuities are created, improving finishes and, above all, providing an important economy on reducing the number of operations necessary at present to turn a wheel on a lathe, the support being prepared once for each profile.

Due to wheel mounting defects or shaft distorsions, the real treading bands are not parallel, and the pulling rollers, should they not have a mechanical freedom degree, should be subject to transverse cyclic strains, little slipping damaging the pulling heads and, nevetheless, as stated in claim 2, the transverse motion of the shaft must be always controlled by transverse rollers which are selfblocked at a fixed position, which avoids to use a tailstock.

This is obtained due to the orientation of the pulling heads according to the real treading band alignement of the railway shaft.

Lastly, upon establising four independent pulling kinematic chains, the operations would simplify, and, as stated in claim 3, the pulling rollers being hideable, would allow the vehicles to pass over the turning lathe at a working speed when the lathe is out of service.

The above statements show the simplicity of the kinematic - chain and a substantial weight lightening.

### BRIEF DESCRIPTION OF THE DRAWINGS

In order to supplement the present description and to help to a better understanding of the features of the invention, the appended drawings, which are a part of this specification, show in an illustrative but not limitative way, the following:
Figure 1 shows a view of the wheel shaft support on its own grease box.
Figure 2 shows a view of the pulling heads.
Figure 3 shows a new detail of the lathe for railway wheels which is the object of the invention.
Figure 4 shows again a view of the pulling heads.

### DETAILED DESCRIPTION OF THE INVENTION

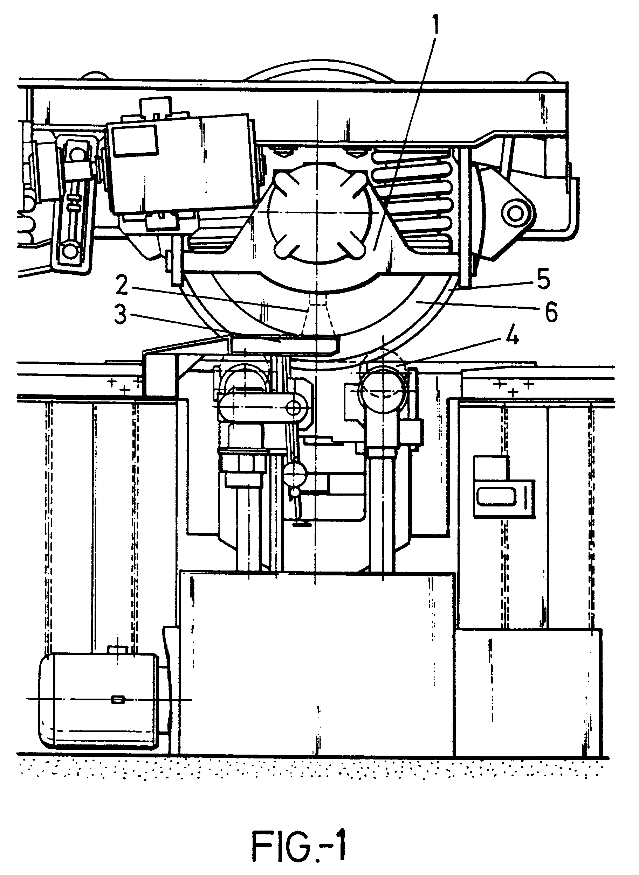

From these Figures, it can be seen particularly in Fig. 1 how the railway shaft 1 is supported by means of adjustable supplements 2, on a static area of the machine, which is stiffly united to the bed plate in the civil works 3.

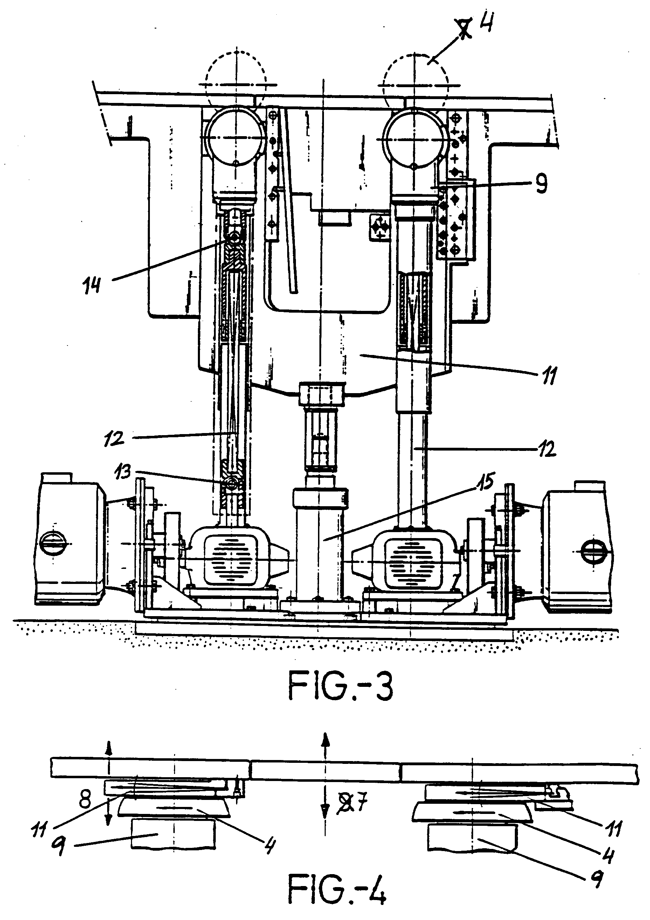

As can clearly be seen in Fig. 3, the pair of pulling rollers 4 corresponding to each wheel 6 are mounted on a U-shaped support 11 and are driven through respective motion transmission shafts 12 provided with cardan joints 13, 14, the hydraulic pressure to lift the pulling rollers 4 being applied to said support 11 from a hydraulic cylinder 15.

The pulling rollers 4 lift hydraulically to attain the treading bands 5, and adjusting the hydraulic pressure, the shaft is discharged by a value enough to cause the pulling of the wheel without slipping, both heads being independent and counteracting the cutting force tangential to the treading band.

This fact has the advantage that the machining is independent of the treading condition, for which the form defects which be left upon the wheel machining are only related to the condition of the vehicle grease box and not to the previous conditions to the machining exhibited by the treading.

As it has been said in the description of the invention, the turning operation on the lathe is carried out in only one passing on the surface to be mechanized, to be understood as such, in general, the continuous profile from the outer face of the wheel to the inner face of the wheel 6, with no need for modifying the shaft support and the wheel pulling.

This fact has the advantage that no discontinuity in the profil is created, improving finishes and, over all, providing important savings on reducing the number of necessary operations to turn on the lathe a wheel, its support being prepared once per profile.

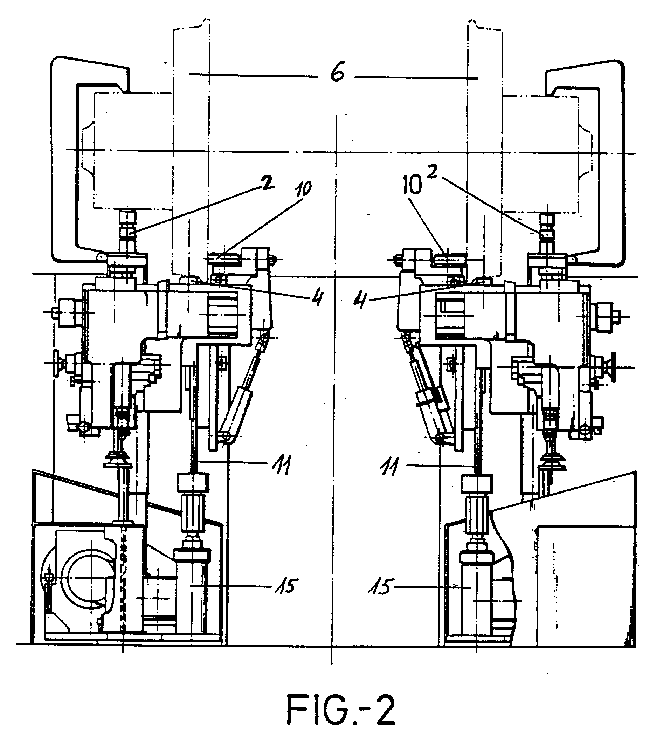

Figures 2 and 4 show the orientation of the pulling heads - according to the alignment of the railway shaft real treading bands.

Due to wheel mounting defects or shaft distorsions, the real treading bands are not parallel, for which, should the pulling rollers 4 not have a mechanical freedom degree in the sense as referenced in 8, they should be subject to transverse cyclic strains, and also to little slippings damaging the pulling heads 9, but nevertheless the transverse motion of the shaft according to the direction as especified in 7 is controlled by transverse rollers 10, autoblocked to a fixed position, which avoids to use a tailstock.

This fact has the advantage that it gives a great stability to the machining, guaranteeing an invariability of the mechanized starting point and the non existence of defects or distorsions due to the treading wheel.

Lastly, it must be pointed out that the lathe which is the object of this invention exhibits a great simplicity of the kinematic chain and a substantial weight lightening, due to the fact that, on establishing four independent pulling kinematic chains, it is possible that these chains will be very simple, and because the pulling rollers are hideable, it allows the vehicle to pass over the turning lathe at a working speed when the machine is out of service.

It is not considered necessary to extend more this description for an expert in the art to understand the scope of the invention and the advantages derived from it.

The materials, shape, size and arrangement of its components are open to variation, provided that it does not imply any alteration to the essence of the invention.

## Claims

1. A lathe for railway wheels, intended to turn wheels carried by a shaft in railway vehicles, comprising mounting means (2) connected to the grease boxes of the wheels (6); pulling rollers (4) which are four in number, two per wheel, and angularly orientable in order for them to absorb wheel mounting defects or shaft distorsions, and having independent drives, so that four independent pulling kinematic chains are established, the pulling rollers (4) being adapted to be hydraulically lifted to contact the treading bands (5) of the wheels and, together with their corresponding pulling heads (9), counteracting the cutting force tangential to the treading bands (5); and transverse rollers (10) adapted to contact the inner faces of the wheels, each provided with an independent drive adapted to apply a pressure on the inner face of the corresponding wheel sufficiently high to centre the railway shaft (1), restricting its transverse motion, but not to prevent the wheels (6) from rotating, characterized in that the mounting means consists of adjustable supplements (2) through which the railway shaft (1) is supported on a static zone of the machine united to the bedplate integrated in the civil works (3); and the pulling rollers (4) of the pair corresponding to each wheel (6) are mounted on a U-shaped support (11) and are each driven through a motion transmission shaft (12) provided with cardan joints (13, 14), the hydraulic pressure to lift the pulling rollers (4) being applied to said support (11) from a hydraulic cylinder (15) and thereafter being so adjusted that the railway shaft (1) mainly rests on the adjustable supplements (2), the part of the weight of the shaft (1) supported by the pulling rollers (4) being limited to a value sufficient to cause the wheel pulling with no slipping.

2. A lathe for railway wheels according to claim 1, characterized in that the pulling rollers (4) along, with their pulling heads (9) are transversally orientable.

3. A lathe for railway wheels according to any of the preceding claims, characterized in that the pulling rollers (4) as well as the transverse rollers (10) are hideable in such a way that a railway vehicle is able to pass over the lathe at a working speed when the same is not in use.

## Patentansprüche

1. Drehbank für Eisenbahnräder, die dazu bestimmt ist, bei Eisenbahnfahrzeugen von einer Welle getragene Räder zu drehen, umfassend Montagemittel (2), die mit den Fettkästen der Räder (6) in Verbindung stehen; Mitnehmerwalzen (4), die in Viererzahl, zwei pro Rad, angeordnet und im Winkel orientierbar sind, um Montagemängel der Räder oder Wellenverzerrungen kompensieren zu können, und die unabhängige Antriebe aufweisen, so daß vier unabhängige, kinematische Mitnehmerketten entstehen, wobei die Mitnehmerwalzen (4) dazu bestimmt sind, hydraulisch angehoben zu werden, bis sie mit den Laufflächen (5) der Räder in Kontakt sind und zusammen mit ihren entsprechenden Mitnehmerköpfen (9) die Tangetialschnittkraft der Laufflächen (5) ausgleichen; und Querwalzen (10), die dazu bestimmt sind, mit den Innenseiten der Räder in Kontakt zu treten, wobei jede von ihnen mit einem unabhängigen Antrieb versehen ist, der dazu bestimmt ist, auf die Innenseite des entsprechenden Rades einen ausreichend großen Druck auszuüben, um die Eisenbahnwelle (1) zu zentrieren, indem ihre Querbewegung beschränkt wird, jedoch ohne das Drehen der Räder (6) zu verhindern, dadurch gekennzeichnet, daß die Montagemittel aus justierbaren Einsätzen (2) bestehen, durch die die Eisenbahnwelle (1) über einer statischen Zone der Maschine getragen wird, die mit dem im Zivilbau (3) integrierten Bett in Verbindung steht; und die Mitnehmerwalzen (4) des jedem Rad (6) entsprechenden Paars auf einer U-förmigen Stütze (11) montiert sind und jedes einzelne von einer Bewegungstransmissionswelle (12) angetrieben wird, die mit Kardanverbindungen (13,14) versehen ist, wobei auf die besagte Stütze (11) von einem hydraulischen Zylinder (15) aus der hydraulische Druck angewandt wird, um die Mitnehmerwalzen (4) anzuheben und diese dann so justiert werden, daß die Eisenbahnwelle (1) hauptsächlich auf den justierbaren Einsätzen (2) ruht und der von den Mitnehmerwalzen (4) getragene Gewichtsteil der Welle (1) auf einen Wert beschränkt ist, der ausreicht, um die Mitnahme des Rades ohne Gleiten hervorzurufen.

2. Drehbank für Eisenbahnräder nach Anspruch 1, dadurch gekennzeichnet, daß die Mitnehmerwalzen (4) zusammen mit ihren Mitnehmerköpfen (9) in Querrichtung orientierbar sind.

3. Drehbank für Eisenbahnräder nach einem der vorstehenden Ansprüche, dadurch gekennzeichnet, daß die Mitnehmer- (4) und Querwalzen (10) so versenkbar sind, daß ein Eisenbahnfahrzeug bei Manövriergeschwindigkeit über die Drehbank hinweggleiten kann, wenn sie nicht benutzt wird.

## Revendications

1. Un tour pour roues ferroviaires, destiné à façonner les roues portées par un axe dans les véhicules ferroviaires, incluant des moyens de montage (2) connectés aux boîtes de graisse des roues (6); rouleaux d'entraînement (4) disposés en nombre de quatre, deux par roue, et qui sont orientables angulairement afin d'absorber les défauts de montage des roues ou les distorsions de l'axe, et qui possèdent des actionnements indépendants, de telle sorte que sont établies quatre chaînes cinématiques d'entraînement indépendantes, les rouleaux d'entraînement (4) étant destinés à être élevés hydrauliquement jusqu'à faire contact avec les bandes de roulement (5) des roues, et contrecarrant, conjointement à leurs têtes d'entraînement correspondantes (9), la force de coupe tangentielle des bandes de roulement (5); et rouleaux transversales (10) destinés à faire contact avec les faces intérieures des roues, chacun d'eux étant pourvu d'un actionnement indépendant destiné à appliquer une pression sur la face intérieure de la roue correspondante suffisamment grande pour centrer l'axe ferroviaire (1), limitant son mouvement transversal mais sans empêcher le roulement des roues (6), caractérisé par ce que les moyens de montage consistent en des suppléments ajustables (2) à travers lesquels l'axe ferroviaire (1) est supporté sur une zone statique de la machine jointe au banc intégré dans la construction (3); et les rouleaux d'entraînement (4) du couple correspondant à chaque roue (6) sont montés sur un support (11) en forme de U et sont actionnés chacun par un axe de transmission de mouvement (12) pourvu de joints cardan (13, 14), la pression hydraulique pour lever les rouleaux d'entraînement (4) étant appliquée sur ledit support (11) à partir d'un cylindre hydraulique (15) et ces rouleaux étant ajustés ensuite de telle sorte que l'axe ferroviaire (1) repose principalement sur les suppléments ajustables (2), la partie du poids de l'axe (1) supportée par les rouleaux d'entraînement (4) étant limitée à une valeur suffisante pour produire l'entraînement de la roue sans glissement.

2. Tour pour roues ferroviaires suivant la revendication 1, caractérisé par le fait que les rouleaux d'entraînement (4) avec les têtes d'entraînement (9) sont orientables transversalement.

3. Tour pour roues ferroviaires suivant l'une quelconque des revendications anterieures, caractérisé par ce que les rouleaux d'entraînement (4) et les rouleaux transversales (10) sont escamotables de telle sorte qu'un véhicule ferroviaire puisse passer sur le tour à une vitesse de manoeuvre lorsqu'il n'est pas utilisé.
